# EUROPEAN PATENT SPECIFICATION

(11) **EP 4 121 485 B1**
(45) Date of publication and mention of the grant of the patent: **02.09.2026**
(21) Application number: 21712486.6
(22) Date of filing: 15.03.2021
(51) Int. Cl.: C08L 83/16

(54) **STABILIZER FOR SUPPRESSING GENERATION OF SILANE FROM A POLYSILANE COMPOSITION AND METHOD FOR SUPPRESSING GENERATION OF SILANE**
STABILISATOR ZUR UNTERDRÜCKUNG DER ERZEUGUNG VON SILAN AUS EINER POLYSILANZUSAMMENSETZUNG UND VERFAHREN ZUR UNTERDRÜCKUNG DER ERZEUGUNG VON SILAN
STABILISATEUR POUR SUPPRIMER LA GÉNÉRATION DE SILANE DANS UNE COMPOSITION DE POLYSILANE ET PROCÉDÉ DE SUPPRESSION DE LA GÉNÉRATION DE SILANE

(30) Priority: 18.03.2020 JP 2020047598
(43) Date of publication of application: 25.01.2023
(73) Proprietor: Merck Patent GmbH, 64293 Darmstadt (DE)
(72) Inventor: TAKAGISHI, Hideyuki, Kakegawa-shi, Shizuoka 437--1412 (JP); NAKAMOTO, Naoko, Kakegawa-shi, Shizuoka 437--1412 (JP); SATO, Atsuhiko, Kakegawa-shi, Shizuoka 437--1412 (JP)
(74) Representative: Merck Patent Association
(86) International application number: PCT/EP2021/056446
(87) International publication number: WO 2021/185715

(56) References cited:
- US-A- 5 532 288
- US-A1- 2005 074 618

## Description

### BACKGROUND OF THE INVENTION

### TECHNICAL FIELD

The present invention relates to the use of a stabilizer for suppressing generation of silane from a polysilane composition and a method for suppressing generation of silane. Further, the present invention relates to a method for inactivating a polysilane, leading to a polysilane inactivated treatment composition.

### BACKGROUND ART

Silicon films have relatively high hardness and sealability, and are used for various applications in semiconductor manufacturing field. In specific, silicon films are used for applications such as hard coating films of substrates, circuits and the like, gas barrier films, and substrate strength enhancement films.

High molecular weight polysilane can form a thin film in a simple process comprising applying a coating solution and heating, without a vacuum state, due to their solubility in solvents. Polysilane can used for filling fine grooves of interlayer insulation films of semiconductor devices by liquid capillary action.

It is known that polysilane can be decomposed to generate silane gas (SiH₄ gas) after a long storage. SiH₄ gas has very highly volatility and can ignite spontaneously in air. From the viewpoint of safety, such silane gas has been treated by a method such as hydrolysis by an alkali solution, adsorption removal using metal oxide, or combustion, for a long time. However, all these treating methods need to use equipment. Further, these methods are to treat generated silane and not to suppress silane generation.

Thus, there is a danger until the treatment is completed.

When a coating solution comprising polysilane is applied to form a thin film, for example, spin coating method can be employed. When the solution is coated on a substrate by spin coating method, edge beads are formed on the periphery of the substrate and, in addition, the solution sneaks to the backside of the substrate. In order to prevent the coating film from becoming nonuniform in thickness at the peripheral part of the substrate due to the presence of the edge beads, in general, edge bead removal treatment (hereinafter referred to as "EBR treatment") is carried out. After coating of the coating solution, a treating solvent is coated or sprayed on the surface side of the substrate to remove (edge cut) the coating film at its peripheral part. In addition, back rinsing is also carried out for removing the polysilane which sneaked and was deposited on the backside of the substrate to clean the backside. This rinse solution after back rinsing comprises polysilane.

Further, the coating film is required to be removed from the substrate depending on the necessity of conducting subsequent treatment, and the polysilane deposited on the coating device such as a spin coater is required to be washed or removed. The remover and the like after such treatment comprises polysilane.

Such a rinse solution and remover comprising polysilane can be temporarily retained in a waste liquid tank. In the waste liquid tank, silane gas is generated, and therefore the silane gas is required to be treated as described above.

US 2005/074618 A1 discloses a mixture of a polyperhydrosilane, 1-octene and toluene; but no method to suppress the generation of silane is disclosed in this document. From the viewpoint of meeting demands for higher-accuracy quality control, reliable safety and the like in recent years, there is a need for a method that can use polysilane in a safer and simpler manner.

### SUMMARY OF THE INVENTION

### PROBLEMS TO BE SOLVED BY THE INVENTION

It is an object of the present invention to use a stabilizer for suppressing generation of silane from a polysilane composition and a method for suppressing generation of silane. Further, it is an object of the present invention to provide a method for inactivating a polysilane, leading to a polysilane inactivated treatment composition.

### MEANS FOR SOLVING THE PROBLEMS

The stabilizer for suppressing generation of silane from a polysilane composition according to the present invention is represented by the following formula:

CH₂=CH-R¹

wherein R¹ is
C₃₋₂₀ linear, branched or cyclic alkyl group,
C₂₋₁₅ linear or branched alkenyl group or
C₇₋₂₀ aryl group substituted with alkenyl group.

Claimed is the use of the stabilizer according to the present invention, wherein generation of silane from a polysilane composition is suppressed by adding above mentioned stabilizer.

Also claimed is the method for suppressing generation of silane according to the present invention, comprising making above mentioned stabilizer coexist with a polysilane.

A polysilane inactivated treatment composition is therefore disclosed comprising above mentioned stabilizer and a solvent.

### EFFECTS OF THE INVENTION

According to the present invention, generation of silane from a polysilane composition is suppressed and silane concentration can be kept low in a simple manner.

### DETAILED DESCRIPTION OF THE INVENTION

### MODE FOR CARRYING OUT THE INVENTION

Embodiments of the present invention are described below in detail. Hereinafter, symbols, units, abbreviations, and terms have the following meanings in the present specification unless otherwise specified.

In the present specification, unless otherwise specifically mentioned, the singular includes the plural and "one" or "that" means "at least one". In the present specification, unless otherwise specifically mentioned, an element of a concept can be expressed by a plurality of species, and when the amount (for example, mass % or mol%) is described, it means sum of the plurality of species. "And/or" includes a combination of all elements and also includes single use of the element.

In the present specification, when numerical ranges are indicated using "to" or "-", they include both end points, and the units thereof are common. For example, 5 to 25 mol % means 5 mol % or more and 25 mol % or less.

In the present specification, the hydrocarbon means one including carbon and hydrogen, and optionally including oxygen or nitrogen. The hydrocarbyl group means a monovalent or divalent or higher valent hydrocarbon.

In the present specification, the aliphatic hydrocarbon means a linear, branched or cyclic aliphatic hydrocarbon, and the aliphatic hydrocarbon group means a monovalent or divalent or higher valent aliphatic hydrocarbon. The aromatic hydrocarbon means a hydrocarbon comprising an aromatic ring which may optionally not only comprise an aliphatic hydrocarbon group as a substituent but also be condensed with an alicycle. The aromatic hydrocarbon group means a monovalent or divalent or higher valent aromatic hydrocarbon. Further, the aromatic ring means a hydrocarbon comprising a conjugated unsaturated ring structure, and the alicycle means a hydrocarbon comprising a ring structure but no conjugated unsaturated ring structure.

In the present specification, the alkyl means a group obtained by removing any one hydrogen from a linear or branched, saturated hydrocarbon and includes a linear alkyl and branched alkyl, and the cycloalkyl means a group obtained by removing one hydrogen from a saturated hydrocarbon comprising a cyclic structure and includes a linear or branched alkyl in the cyclic structure as a side chain, if necessary.

In the present specification, the alkenyl means a group obtained by removing any one hydrogen from carbon of linear or branched hydrocarbon having one carbon-carbon double bond.

In the present specification, the aryl means a group obtained by removing any one hydrogen from an aromatic hydrocarbon. The alkylene means a group obtained by removing any two hydrogen from a linear or branched, saturated hydrocarbon. The arylene means a hydrocarbon group obtained by removing any two hydrogen from an aromatic hydrocarbon.

In the present specification, the description such as "C_{x-y}", "Cₓ-C_{y}" and "Cₓ" means the number of carbons in the molecule or substituent group. For example, C₁₋₆ alkyl means alkyl having 1 to 6 carbons (such as methyl, ethyl, propyl, butyl, pentyl and hexyl). Further, the fluoroalkyl as used in the present specification refers to one in which one or more hydrogen in alkyl is replaced with fluorine, and the fluoroaryl is one in which one or more hydrogen in aryl are replaced with fluorine.

In the present specification, when a polymer comprises plural types of repeating units, these repeating units copolymerize. These copolymerizations can be any of alternating copolymerization, random copolymerization, block copolymerization, graft copolymerization, or any mixture thereof.

In the present specification, "%" represents weight % and "ratio" represents ratio by weight.

In the present specification, Celsius is used as the temperature unit. For example, 20 degrees means 20 degrees Celsius.

### <Stabilizer>

The stabilizer according to the present invention is used for suppressing generation of silane for a polysilane composition, and represented by the following formula:

CH₂=CH-R¹

wherein R¹ is
C₃₋₂₀ linear, branched or cyclic alkyl group,
C₂₋₁₅ linear or branched alkenyl group or
C₇₋₂₀ aryl group substituted with alkenyl group.

Preferably, R¹ is
(i) C₃₋₂₀ linear or branched alkyl group,
(ii) C₅₋₈ cyclic alkyl group,
(iii) C₃₋₁₅ linear alkenyl group having an unsaturated bond at a terminal, or
(iv) C₇₋₁₀ phenyl group substituted with alkenyl group having an unsaturated bond at a terminal.

When R¹ is (i), examples of the stabilizer include 1-pentene, 1-hexene, 3-methyl-1-pentene, 4-methyl-1-pentene, 3,3-dimethyl-1-butene, 1-heptene, 5-methyl-1-hexene, 1-octene, 1-nonene, 1-decene, 1-dodecene, 1-tetradecene, 1-hexadecene, and 1-octadecene.

When R¹ is (ii), the stabilizer is preferably 5 membered ring or 6 membered ring, and examples of the stabilizer include vinylcyclopentane, vinylcyclohexane, and allylcyclohexane.

When R¹ is (iii), examples of the stabilizer include 1,4-pentadiene, 1,5-hexadiene, 1,6-heptadiene, 1,7-octadiene, 1,8-nonadiene, 1,9-decadiene, 1,10-undecadiene, and 1,11-dodecadiene.

When R¹ is (iv), examples of the stabilizer include 1,2-divinylbenzene, 1,3-divinylbenzene, and 1,4-divinylbenzene.

The stabilizer according to the present invention can be a mixture containing 2 or more kinds of the above described compounds.

The stabilizer according to the present invention can generally be applied to any polysilane composition. Polysilane composition can consist only of polysilane, and can comprise components other than polysilane, for example a solvent.

The polysilane that can be stabilized by the stabilizer according to the present invention is not particularly limited as long as it is a linear, branched or cyclic compound having a main chain consisting of only Si-Si bonds. The polysilane having branched structures is preferred because it is more likely to exert the effect of suppressing generation of silane due to its more terminal groups.

The polysilane is preferably polyperhydrosilane because the effect of the stabilizer according to the present invention becomes higher.

The mass molecular weight of polysilane is not particularly limited. When the mass molecular weight of polysilane is 300 to 10,000, more preferably 500 to 5,000, it is preferred because the effect of the stabilizer according to the present invention is higher. The mass average molecular weight is a mass average molecular weight in terms of polystyrene, and it can be measured by gel permeation chromatography based on polystyrene.

Generation of silane from a polysilane composition can be suppressed by adding the stabilizer according to the present invention to the polysilane composition to make the stabilizer coexist with the polysilane. Without wishing to be bound by theory, it is believed that this is due to the following reason.

The stabilizer according to the present invention has a C-C double bond at a terminal. Polysilane decomposes to form a silylene radical, and the silylene radical react with the other polysilane to increase the molecular weight of the polysilane. Silylene radical is likely to bond with a compound having a double bond to form a stable compound. Thus, making the stabilizer according to the present invention coexist with polysilane can prevent further polymerization of polysilane due to the reaction of formed silylene radical with the stabilizer. The higher the molecular weight of polysilane is, the more silane gas is generated in a short period time. Therefore, silane gas generation amount can be reduced by suppressing the further polymerization reaction using the stabilizer according to the present invention.

The number of moles of the stabilizer according to the present invention is preferably 10 to 1,000 mol %, and more preferably 50 to 300 mol %, based on the number of moles of Si contained in polysilane.

### <Polysilane inactivated treatment composition>

The polysilane inactivated treatment composition obtained (hereinafter sometimes referred to as "treatment composition") comprises above described stabilizer and a solvent. The polysilane inactivated treatment composition according to the present invention can be suitably used as an edge bead removal treatment composition or a waste liquid treatment composition.

The solvent is selected from those which uniformly dissolve the stabilizer. In particular, examples of the solvent include ethylene glycol monoalkyl ethers, such as ethylene glycol monomethyl ether, ethylene glycol monoethyl ether, ethylene glycol monopropyl ether and ethylene glycol monobutyl ether; diethylene glycol dialkyl ethers, such as diethylene glycol dimethyl ether, diethylene glycol diethyl ether, diethylene glycol dipropyl ether and diethylene glycol dibutyl ether; ethylene glycol alkyl ether acetates, such as methyl cellosolve acetate and ethyl cellosolve acetate; propylene glycol monoalkyl ethers, such as propylene glycol monomethyl ether (PGME) and propylene glycol monoethyl ether; propylene glycol alkyl ether acetates such as propylene glycol monomethyl ether acetate (PGMEA), propylene glycol monoethyl ether acetate and propylene glycol monopropyl ether acetate; aromatic hydrocarbons, such as benzene, toluene, xylene and mesitylene; ketones, such as methyl ethyl ketone, acetone, methyl amyl ketone, methyl isobutyl ketone and cyclohexanone; alcohols, such as isopropanol and propanediol; and alicyclic hydrocarbons, such as cyclooctane and decalin. Preferred are cyclooctane, toluene, decalin and mesitylene.

These solvents can be used alone or in combination of two or more of any of these.

The mixing ratio of the solvent depends on its applications. The ratio of the other components other than the solvent is preferably 1 to 96 mass %, and more preferably 2 to 60 mass %.

In the treatment composition according to the present invention, if necessary, further compounds can be comprised to the extent that the effects of the present invention are not impaired. The ratio of components other than the stabilizer and solvent is preferably 10 mass % or less, and more preferably 5 mass % or less.

Hereinafter, the present invention is explained with reference to Examples. These Examples are for explanation and are not intended to limit the scope of the present invention.

In the following description, "part" is on a mass basis unless otherwise specified.

The steps in which polysilane is treated in the following synthesis examples and Examples are all carried out in a glove box controlled to have an oxygen concentration of 1.0 ppm or less and a dew point temperature of -76.0°C or less under a nitrogen atmosphere.

### Synthesis of polysilane

A stirrer tip is placed in a 50 mL screw tube, and 30 g (0.166 mol) of cyclohexasilane is added thereto and stirred using a stirrer. Here, 8.5 J /cm² of ultraviolet ray having a wavelength of 365 nm using a mercury xenon lamp as a light source is irradiated. After the ultraviolet irradiation, it is dissolved in cyclooctane, and cyclooctane is added so that the solid concentration is 19 mass %. The mass average molecular weight of the obtained polysilane is 800.

### Examples 1 to 4 and Comparative examples 1 and 2

To a 20mL glass syringe vial (ASLAB2017-V, SCW223: AS ONE Corporation), 0.2 g of the cyclooctane solution obtained from the synthesis example and the stabilizer described in Table 1 are added. Then, cyclooctane is added so that the concentration of the polysilane is 10 mass % based on the total mass of the solution. Noted that comparative example 1 contains no stabilizer.

The gas phase of the syringe vial is air and sealed. Three syringe vials which are same conditions are prepared, and they are stored at 23±1°C for 72 hours.

After 72 hours, the silane concentration in the gas-phase is measured by gas chromatography. An average value of the 3 measured values is used as a measured value.

**Table 1**

| | Stabilizer | Content of the stabilizer based on the number of moles of Si in polysilane (mol%) | Silane concentration after 72 hours (ppm) |
|---|---|---|---|
| Example 1 | 1-octene | 200 | 8 |
| Example 2 | 1-octene | 100 | 9 |
| Example 3 | divinylbenzene | 200 | 6 |
| Example 4 | 1,5-hexadiene | 200 | 9 |
| Comparative example 1 | - | - | 2,000 |
| Comparative example 2 | styrene | 200 | 4,900 |

### Measurement of silane concentrations

The silane concentration in the gas-phase is measured by GC-8A Gas Chromatograph (Shimadzu Corporation), Carrier gas: N₂, Column: PoraPak Q80/100, Detector: TCD. Calibration is carried out with 1000 ppm silane standard gas.

## Claims

1. Use of a stabilizer represented by the following formula for suppressing generation of silane from a polysilane composition:
CH₂=CH-R¹
wherein R¹ is
C₃₋₂₀ linear, branched or cyclic alkyl group,
C₂₋₁₅ linear or branched alkenyl group or
C₇₋₂₀ aryl group substituted with alkenyl group, wherein the generation of silane from polysilane composition is suppressed by adding the stabilizer.

2. The use of the stabilizer according to claim 1, wherein R¹ is
C₃₋₂₀ linear or branched alkyl group,
C₅₋₈ cyclic alkyl group,
C₃₋₁₅ linear alkenyl group having an unsaturated bond at a terminal, or
C₇₋₁₀ phenyl group substituted with alkenyl group having an unsaturated bond at a terminal.

3. The use of the stabilizer according to claim 1 or 2, wherein the stabilizer is selected from the group consisting of 1-pentene, 1-hexene, 3-methyl-1-pentene, 4-methyl-1-pentene, 3,3-dimethyl-1-butene, 1-heptene, 5-methyl-1-hexene, 1-octene, 1-nonene, 1-decene, 1-dodecene, 1-tetradecene, 1-hexadecene, 1-octadecene, vinylcyclopentane, vinylcyclohexane, allylcyclohexane, 1,4-pentadiene, 1,5-hexadiene, 1,6-heptadiene, 1,7-octadiene, 1,8-nonadiene, 1,9-decadiene, 1,10-undecadiene, 1,11-dodecadiene, 1,2-divinylbenzene, 1,3-divinylbenzene, and 1,4-divinylbenzene.

4. The use of the stabilizer according to one or more of claims 1 to 3, wherein the polysilane is polyperhydrosilane.

5. A method for suppressing generation of silane, comprising making a stabilizer represented by the following formula:
CH₂=CH-R¹
wherein R¹ is
C₃₋₂₀ linear, branched or cyclic alkyl group,
C₂₋₁₅ linear or branched alkenyl group or
C₇₋₂₀ aryl group substituted with alkenyl group;
coexist with a polysilane.

6. The method for suppressing generation of silane according to claim 5, wherein R¹ is
C₃₋₂₀ linear or branched alkyl group,
C₅₋₈ cyclic alkyl group,
C₃₋₁₅ linear alkenyl group having an unsaturated bond at a terminal, or
C₇₋₁₀ phenyl group substituted with alkenyl group having an unsaturated bond at a terminal.

7. The method according to claims 5 or 6, wherein the stabilizer is selected from the group consisting of 1-pentene, 1-hexene, 3-methyl-1-pentene, 4-methyl-1-pentene, 3,3-dimethyl-1-butene, 1-heptene, 5-methyl-1-hexene, 1-octene, 1-nonene, 1-decene, 1-dodecene, 1-tetradecene, 1-hexadecene, 1-octadecene, vinylcyclopentane, vinylcyclohexane, allylcyclohexane, 1,4-pentadiene, 1,5-hexadiene, 1,6-heptadiene, 1,7-octadiene, 1,8-nonadiene, 1,9-decadiene, 1,10-undecadiene, 1,11-dodecadiene, 1,2-divinylbenzene, 1,3-divinylbenzene, and 1,4-divinylbenzene.

8. The method for suppressing generation of silane according to any one of claims 5 to 7, wherein the polysilane is polyhydrosilane.

## Patentansprüche

1. Verwendung eines Stabilisators, der dargestellt wird durch die folgende Formel, zur Unterdrückung der Silanbildung aus einer Polysilanzusammensetzung:
CH₂=CH-R¹
wobei R¹
lineare, verzweigte oder cyclische C₃₋₂₀-Alkylgruppe,
lineare oder verzweigte C₂₋₁₅-Alkenylgruppe oder
C₇₋₂₀-Arylgruppe, die mit Alkenylgruppe substituiert ist, ist,
wobei die Silanbildung aus Polysilanzusammensetzung durch Zugabe des Stabilisators unterdrückt wird.

2. Verwendung des Stabilisators nach Anspruch 1, wobei R¹ lineare oder verzweigte C₃₋₂₀-Alkylgruppe,
cyclische C₅₋₈-Alkylgruppe,
lineare C₃₋₁₅-Alkenylgruppe mit einer ungesättigten Bindung an einem Ende oder
C₇₋₁₀-Phenylgruppe, die mit Alkenylgruppe mit einer ungesättigten Bindung an einem Ende substituiert ist, ist.

3. Verwendung des Stabilisators nach Anspruch 1 oder 2, wobei der Stabilisator ausgewählt ist aus der Gruppe bestehend aus 1-Penten, 1-Hexen, 3-Methyl-1-penten, 4-Methyl-1-penten, 3,3-Dimethyl-1-buten, 1-Hepten, 5-Methyl-1-hexen, 1-Octen, 1-Nonen, 1-Decen, 1-Dodecen, 1-Tetradecen, 1-Hexadecen, 1-Octadecen, Vinylcyclopentan, Vinylcyclohexan, Allylcyclohexan, 1,4-Pentadien, 1,5-Hexadien, 1,6-Heptadien, 1,7-Octadien, 1,8-Nonadien, 1,9-Decadien, 1,10-Undecadien, 1,11-Dodecadien, 1,2-Divinylbenzol, 1,3-Divinylbenzol und 1,4-Divinylbenzol.

4. Verwendung des Stabilisators nach einem oder mehreren der Ansprüche 1 bis 3, wobei es sich bei dem Polysilan um Polyperhydrosilan handelt.

5. Verfahren zur Unterdrückung der Silanbildung, welches umfasst, dass man einen Stabilisator, der dargestellt wird durch die folgende Formel:
CH₂=CH-R¹
wobei R¹
lineare, verzweigte oder cyclische C₃₋₂₀-Alkylgruppe,
lineare oder verzweigte C₂₋₁₅-Alkenylgruppe oder
C₇₋₂₀-Arylgruppe, die mit Alkenylgruppe substituiert ist, ist;
mit einem Polysilan koexistieren lässt.

6. Verfahren zur Unterdrückung der Silanbildung nach Anspruch 5, wobei R¹
lineare oder verzweigte C₃₋₂₀-Alkylgruppe,
cyclische C₅₋₈-Alkylgruppe,
lineare C₃₋₁₅-Alkenylgruppe mit einer ungesättigten Bindung an einem Ende oder
C₇₋₁₀-Phenylgruppe, die mit Alkenylgruppe mit einer ungesättigten Bindung an einem Ende substituiert ist, ist.

7. Verfahren nach den Ansprüchen 5 oder 6, wobei der Stabilisator ausgewählt ist aus der Gruppe bestehend aus 1-Penten, 1-Hexen, 3-Methyl-1-penten, 4-Methyl-1-penten, 3,3-Dimethyl-1-buten, 1-Hepten, 5-Methyl-1-hexen, 1-Octen, 1-Nonen, 1-Decen, 1-Dodecen, 1-Tetradecen, 1-Hexadecen, 1-Octadecen, Vinylcyclopentan, Vinylcyclohexan, Allylcyclohexan, 1,4-Pentadien, 1,5-Hexadien, 1,6-Heptadien, 1,7-Octadien, 1,8-Nonadien, 1,9-Decadien, 1,10-Undecadien, 1,11-Dodecadien, 1,2-Divinylbenzol, 1,3-Divinylbenzol und 1,4-Divinylbenzol.

8. Verfahren zur Unterdrückung der Silanbildung nach irgendeinem der Ansprüche 5 bis 7, wobei es sich bei dem Polysilan um Polyperhydrosilan handelt.

## Revendications

1. Utilisation d'un stabilisant représenté par la formule suivante, pour empêcher la génération de silane à partir d'une composition de polysilane :
CH₂=CH-R¹
dans laquelle R¹ est
un groupement C₃₋₂₀ alkyle linéaire, ramifié ou cyclique,
un groupement C₂₋₁₅ alcényle linéaire ou ramifié ou
un groupement C₇₋₂₀ aryle substitué par un groupement alcényle, où la génération de silane à partir d'une composition de polysilane est empêchée par l'addition du stabilisant.

2. Utilisation du stabilisant selon la revendication 1, dans laquelle R¹ est
un groupement C₃₋₂₀ alkyle linéaire ou ramifié,
un groupement C₅₋₈ alkyle cyclique,
un groupement C₃₋₁₅ alcényle linéaire ayant une liaison insaturée au niveau d'une extrémité, ou
un groupement C₇₋₁₀ phényle substitué par un groupement alcényle ayant une liaison insaturée au niveau d'une extrémité.

3. Utilisation du stabilisant selon la revendication 1 ou 2, dans laquelle le stabilisant est choisi dans le groupe constitué par 1-pentène, 1-hexène, 3-méthyl-1-pentène, 4-méthyl-1-pentène, 3,3-diméthyl-1-butène, 1-heptène, 5-méthyl-1-hexène, 1-octène, 1-nonène, 1-décène, 1-dodécène, 1-tétradécène, 1-hexadécène, 1-octadécène, vinylcyclopentane, vinylcyclohexane, allylcyclohexane, 1,4-pentadiène, 1,5-hexadiène, 1,6-heptadiène, 1,7-octadiène, 1,8-nonadiène, 1,9-décadiène, 1,10-undécadiène, 1,11-dodécadiène, 1,2-divinylbenzène, 1,3-divinylbenzène, et 1,4-divinylbenzène.

4. Utilisation du stabilisant selon l'une ou plusieurs parmi les revendications 1 à 3, dans laquelle le polysilane est le polyperhydrosilane.

5. Méthode destinée à empêcher la génération de silane, consistant à faire coexister un stabilisant représenté par la formule suivante :
CH₂=CH-R¹
dans laquelle R¹ est
un groupement C₃₋₂₀ alkyle linéaire, ramifié ou cyclique,
un groupement C₂₋₁₅ alcényle linéaire ou ramifié ou
un groupement C₇₋₂₀ aryle substitué par un groupement alcényle ;
avec un polysilane.

6. Méthode destinée à empêcher la génération de silane selon la revendication 5, dans laquelle R¹ est
un groupement C₃₋₂₀ alkyle linéaire ou ramifié,
un groupement C₅₋₈ alkyle cyclique,
un groupement C₃₋₁₅ alcényle linéaire ayant une liaison insaturée au niveau d'une extrémité, ou
un groupement C₇₋₁₀ phényle substitué par un groupement alcényle ayant une liaison insaturée au niveau d'une extrémité.

7. Méthode selon les revendications 5 ou 6, dans laquelle le stabilisant est choisi dans le groupe constitué par 1-pentène, 1-hexène, 3-méthyl-1-pentène, 4-méthyl-1-pentène, 3,3-di-méthyl-1-butène, 1-heptène, 5-méthyl-1-hexène, 1-octène, 1-nonène, 1-décène, 1-dodécène, 1-tétradécène, 1-hexadécène, 1-octadécène, vinylcyclopentane, vinylcyclohexane, allylcyclohexane, 1,4-pentadiène, 1,5-hexadiène, 1,6-heptadiène, 1,7-octadiène, 1,8-nonadiène, 1,9-décadiène, 1,10-undécadiène, 1,11-dodécadiène, 1,2-divinylbenzène, 1,3-divinylbenzène, et 1,4-divinylbenzène.

8. Méthode destinée à empêcher la génération de silane selon l'une quelconque des revendications 5 à 7, dans laquelle le polysilane est le polyhydrosilane.
